# EUROPÄISCHE PATENTSCHRIFT

(11) **EP 4 215 308 B1**
(45) Veröffentlichungstag und Bekanntmachung des Hinweises auf die Patenterteilung: **03.07.2024**
(21) Anmeldenummer: 23151080.1
(22) Anmeldetag: 11.01.2023
(51) Int. Cl.: B23K 26/38, B23K 26/14, B23K 26/046, B23K 26/066

(54) **LASERSCHNEIDEVERFAHREN MIT FOKUSLAGE INNERHALB EINER SCHNEIDDÜSE MIT KLEINEM MÜNDUNGSDURCHMESSER**
LASER CUTTING METHOD WITH FOCAL POSITION INSIDE A CUTTING NOZZLE HAVING A SMALL OPENING DIAMETER
PROCÉDÉ DE DÉCOUPE AU LASER AVEC POSITION FOCALE À L'INTÉRIEUR D'UNE BUSE DE COUPE À PETIT DIAMÈTRE D'OUVERTURE

(30) Priorität: 20.01.2022 DE 102022101322
(43) Veröffentlichungstag der Anmeldung: 26.07.2023
(73) Patentinhaber: TRUMPF Werkzeugmaschinen SE + Co. KG, 71254 Ditzingen (DE)
(72) Erfinder: KAISER, Tobias, 71277 Rutesheim (DE)
(74) Vertreter: Trumpf Patentabteilung

(56) Entgegenhaltungen:
- WO-A2-2020/162823
- CN-A- 1 121 453
- DE-A1-102022 101 323
- KR-A- 20220 150 819

## Beschreibung

### Hintergrund der Erfindung

Die Erfindung betrifft ein Schneideverfahren zum Laserstrahl-Brennschneiden von metallischen Werkstücken mit einer Werkstückdicke von zumindest zehn Millimetern und einer Laserleistung von zumindest zehn Kilowatt.

Aus dem Stand der Technik ist es bekannt, bei diesen Verfahren einen Fokus des Laserstrahls mit zunehmender Werkstückdicke weiter von dem Werkstück zu beabstanden, um eine ausreichend hohe Schnittqualität in einem Schnittspalt in dem Werkstück sicherzustellen.

Herkömmliche Laserschneidmaschinen weisen jedoch oft eine Fokussieroptik mit begrenzter Verstellbarkeit der Fokuslage zu hohen Werten auf. Hierdurch wird das Schneiden von dicken Werkstücken bei hoher Schnittqualität erschwert.

Um eine hohe Schnittqualität bei dicken Werkstücken zu ermöglichen, wird daher bei gewöhnlichen Schneideverfahren eine geänderte Fokussieroptik erforderlich. Dies ist jedoch mit hohen Kosten sowie zusätzlicher Rüstzeit verbunden.

Eine höhere Fokuslage bewirkt darüber hinaus eine zunehmende Strahlaufweitung des Laserstrahls, sodass sich ein ausgeprägter Randbereich ausbildet. Der Randbereich weist mit radialer Beabstandung zu einer Mittenachse des Laserstrahls eine stark abfallende Energiedichte auf. Der Randbereich trägt zum eigentlichen Schneidevorgang, d. h. dem Durchtrennen des Werkstücks, nicht bei, erwärmt jedoch das Werkstück im Umfeld des Schnittspalts. Durch die Erwärmung kann es in der Folge zu einem Aufschmelzen des Werkstücks kommen, wodurch die Schnittqualität zusätzlich beeinträchtigt wird.

Aus der WO 2017/043460 A1 ist ein Brennschnittprozess zum Schneiden von Werkstücken mit einer Werkstückdicke von zwölf Millimetern bekannt, bei dem die Fokuslage zwischen der Werkstückoberfläche und der Werkstückmitte angeordnet und verstellbar ist. Der Düsendurchmesser beträgt zwischen 0,6 Millimetern und fünfzehn Prozent der Werkstückdicke.

In der US 8,278,591 B2 ist der Einfluss verschiedener Prozessparameter auf die Schnittqualität eines Laserschneidprozesses beschrieben, wobei ein Düsendurchmesser zwischen 0,5 Millimeter und 5 Millimeter gewählt und der Laserstrahl auf das Werkstück fokussiert wird.

In der US 2012/0154922 A1 sind optische Konfigurationen eines Feststofflasers für einen Laserschneidprozess mit Fokuslagen zwischen fünf Millimetern oberhalb der Werkstückoberfläche und fünf Millimetern unterhalb der Werkstückunterseite beschrieben.

Die CN 1 121 453 A offenbart ein Schneidverfahren zum Schneiden von etwa 45 mm dicken metallischen Werkstücken mittels eines Lasers, wobei der Laser eine Leistung von 0,5 bis 5 kW aufweist und der Brennpunkt sich innerhalb einer Schneiddüse und nah an der Düsenmündung befindet.

### Aufgabe der Erfindung

Es ist eine Aufgabe der Erfindung, ein Laserschneideverfahren bei hoher Laserleistung vorzuschlagen, bei dem die Schnittqualität für dickwandige Werkstücke hochgehalten werden kann.

### Beschreibung der Erfindung

Diese Aufgabe wird erfindungsgemäß gelöst durch ein Schneidverfahren der eingangs genannten Art mit den kennzeichnenden Merkmalen des Anspruchs 1. Mit anderen Worten wird die Aufgabe erfindungsgemäß gelöst durch ein Schneideverfahren zum Laserstrahl-Brennschneiden von metallischen Werkstücken mit einer Werkstückdicke von zumindest zehn Millimetern, mit einer Laserleistung von zumindest zehn Kilowatt, das dadurch gekennzeichnet ist, dass eine Düsenmündung einer Schneiddüse einen Mündungsdurchmesser von höchstens zwei Millimetern aufweist; und dass ein Fokus eines Laserstrahls oberhalb der Düsenmündung angeordnet ist und einen Höchstabstand entlang einer Mittenachse des Laserstrahls von der Düsenmündung aufweist, wobei der Höchstabstand höchstens das Sechzehnfache des Mündungsdurchmessers beträgt.

Gemäß dem erfindungsgemäßen Verfahren kann die Schnittqualität dadurch erhöht werden, dass die Fokuslage bzw. vertikale Lage des Fokus deutlich oberhalb der Düsenmündung gewählt wird, insbesondere in einem relativ zum Mündungsdurchmesser vorgegebenen Bereich. Durch das erfindungsgemäße Verfahren wird ein Erwärmen des Werkstücks neben dem Schnittspalt verringert und eine Schnittspaltbreite geringgehalten, wodurch die Schnittqualität gesteigert werden kann.

Erfindungsgemäß ist der Höchstabstand des Fokus von der Düsenmündung abhängig von dem Mündungsdurchmesser. Mit dem Mündungsdurchmesser steigt oder sinkt der Höchstabstand des Fokus von der Düsenmündung. Mit anderen Worten steigt eine maximale Fokuslage mit zunehmendem Mündungsdurchmesser an bzw. sinkt mit kleiner werdendem Mündungsdurchmesser ab. Hierdurch kann die Fokuslage mit Bezug auf eine hohe Schnittqualität für verschiedene Werkstückdicken zu hohen Werten hin begrenzt werden. Besonders vorteilhaft kann eine herkömmliche Fokussieroptik zum Laserstrahl-Brennschneiden von Werkstücken mit großen Werkstückdicken verwendet werden.

Vorzugsweise kann der durch den Laserstrahl bedingte Energieeintrag in die Schneiddüse durch die Fokuslage festgelegt und durch den Höchstabstand begrenzt werden. Entsprechend kann die Düsenmündung mehr oder weniger stark als optische Blende wirken. Mit anderen Worten kann festgelegt werden, in welchem Umfang der Laserstrahl radial durch die Düsenmündung begrenzt wird. Vorzugsweise begrenzt die Düsenmündung den Laserstrahl in dessen radialer Ausbreitung derart, dass ein durch die Strahlaufweitung ausgebildeter Randbereich des Laserstrahls durch die Düsenmündung zurückgehalten wird, während ein Schnittstrahl des Laserstrahls die Düsenmündung ungehindert durchstrahlen kann. Ein ungewünschtes Erwärmen des Werkstücks neben dem Schnittspalt kann so besonders effektiv verhindert werden.

Erfindungsgemäß ist der Mündungsdurchmesser auf höchstens zwei Millimeter begrenzt. Bevorzugt beträgt der Mündungsdurchmesser höchstens 1,9 Millimeter, besonders bevorzugt höchstens 1,8 Millimeter. Durch Verwendung von kleineren Mündungsdurchmessern kann die Breite des Schnittspalts im Werkstück reduziert werden. Einerseits kann hierdurch die Menge an auszublasender Schmelze des abgetragenen Werkstückmaterials reduziert werden. Andererseits kann der Schnittspalt aufgrund der geringeren Schnittbreite engeren Kurven folgen; es können mit anderen Worten kleinere Krümmungsradien geschnitten werden. Beide Effekte können sich insbesondere bei hoher Laserleistung und begrenzter Fokuslage vorteilhaft auf die Schnittqualität bei Werkstücken mit großer Werkstückdicke auswirken.

Unter dem Fokus ist erfindungsgemäß ein durch eine Fokussieroptik ausgebildeter engster Strahlquerschnitt des Laserstrahls zu verstehen. Mit anderen Worten weitet sich der Laserstrahl entlang seiner Mittenachse mit zunehmendem Abstand von dem Fokus.

Die Fokuslage beschreibt hier und im Folgenden den Abstand zwischen der Düsenmündung der Schneiddüse und dem Fokus bzw. Fokuspunkt entlang der Mittenachse des Laserstrahls. Erfindungsgemäß ist der Fokus oberhalb der Düsenmündung angeordnet bzw. in Laserstrahlrichtung der Düsenmündung vorgelagert. Der Begriff "oberhalb" bezieht sich auf eine Laserstrahlrichtung die vertikal von oben nach unten gerichtet ist. Es versteht sich, dass der Laserstrahl im Rahmen der vorliegenden Erfindung auch in anderen Richtungen verlaufen kann.

Der Mündungsdurchmesser ist als der Durchmesser des geometrisch engsten Querschnitts der Düsenmündung in einer senkrecht zur Mittenachse des Laserstrahls aufgespannten Ebene zu verstehen. Die Größe der Düsenmündung wird durch den Mündungsdurchmesser beschrieben.

Hier und im Folgenden wird eine Abhängigkeit der Fokuslage von dem Mündungsdurchmesser beschrieben. Dies ist von besonderem Vorteil in Bezug auf deren direkte Wechselwirkung. Der Vollständigkeit halber sei angeführt, dass ebenfalls andere Angaben der Lage des Fokus möglich sind. Beispielsweise kann der Abstand zwischen Fokus und Mündungsdurchmesser mittels dem Abstand zwischen Mündungsdurchmesser und einer Fokussierlinse sowie dem Brennpunktabstand von der Fokussierlinse oder mittels dem Abstand zur Werkstückoberseite angegeben werden.

In einer bevorzugten Ausführungsform des Schneideverfahren ist alternativ oder zusätzlich zum Höchstabstand vorgesehen, dass der Fokus einen Mindestabstand von der Düsenmündung aufweist. Hierdurch kann ein übermäßiges Erwärmen der Schneiddüse verhindert werden, wodurch die Haltbarkeit der Schneiddüse verlängert werden kann. Vorzugsweise beträgt der Mindestabstand mindestens das Sechsfache des Mündungsdurchmessers. Hierdurch kann die Haltbarkeit der Schneiddüse besonders deutlich verlängert werden sowie, insbesondere in Kombination mit einem vorhergehend beschriebenen Höchstabstand, die Schnittqualität weiter verbessert werden. Die Fokuslage kann insofern zwischen dem Mindestabstand und dem Höchstabstand gewählt werden.

Bevorzugt ist eine Ausführungsform des Schneideverfahrens, bei der der Mindestabstand durch ein unteres Grenzverhältnis mit einer quadratischen Abhängigkeit von dem Mündungsdurchmesser vorbestimmt ist. Insbesondere weist das untere Grenzverhältnis mit zunehmendem Mündungsdurchmesser eine quadratische Zunahme des Mindestabstands auf. Hierdurch kann die Schnittqualität, insbesondere für Werkstücke mit großer Werkstückdicke, weiter verbessert werden.

Weiter bevorzugt ist eine Ausführungsform des Schneideverfahren, bei der der Höchstabstand durch ein oberes Grenzverhältnis mit einer quadratischen Abhängigkeit von dem Mündungsdurchmesser vorbestimmt ist. Insbesondere weist das obere Grenzverhältnis mit Zunahme des Mündungsdurchmessers eine quadratische Zunahme des Höchstabstands auf. Hierdurch kann der Höchstabstand in Bezug auf den Mündungsdurchmesser besser begrenzt werden, wodurch die Schnittqualität weiter gesteigert werden kann.

Bevorzugt ist ferner eine Ausführungsform des Schneideverfahrens, bei der der Mündungsdurchmesser zumindest 0,8 Millimeter beträgt. Besonders bevorzugt beträgt der Mündungsdurchmesser zumindest 1 Millimeter. Hierdurch kann ein besonders schmaler Schnittspalt ausgebildet und eine (gegenüber größeren Schneiddüsen) niedrigere Fokuslage gewählt werden.

In einer bevorzugten Ausführungsform des Schneideverfahrens ist der Mündungsdurchmesser in Abhängigkeit von der Werkstückdicke vorbestimmt. In diesem Fall nimmt der Mündungsdurchmesser mit zunehmender Werkstückdicke zu. Dies ermöglicht das Schneiden von Werkstücken mit zunehmender Werkstückdicke bei hoch gehaltener Schnittqualität.

Eine bevorzugte Weiterbildung des Schneideverfahrens sieht vor, dass eine Obergrenze des Mündungsdurchmessers eine quadratische Abhängigkeit von der Werkstückdicke aufweist. Insbesondere nimmt die Obergrenze mit zunehmender Werkstückdicke quadratisch zu. Hierdurch kann insbesondere die Schnittqualität für Werkstücke mit großer Werkstückdicke weiter verbessert werden.

In einer bevorzugten Ausführungsform des Schneideverfahrens beträgt ein Düsenabstand zwischen dem metallischen Werkstück und der Düsenmündung zumindest 0,2 Millimeter. Besonders bevorzugt beträgt der Düsenabstand zumindest 0,3 Millimeter. Der Düsenabstand ist der Abstand zwischen der Düsenmündung und der Oberfläche des Werkstücks entlang der Mittenachse des Laserstrahls. Die genannten Mindestwerte für den Düsenabstand begünstigen die schnelle und kollisionsfreie Durchführung des Schneideverfahrens.

In einer bevorzugten Weiterbildung des Schneideverfahrens beträgt der Düsenabstand höchstens 3,5 Millimeter. Besonders bevorzugt beträgt der Düsenabstand höchstens 3 Millimeter, beträgt. Ein möglichst geringer Düsenabstand wirkt einer Strahlaufweitung des Laserstrahls nach Durchstrahlen der Düsenmündung entgegen, sodass die Schnittbreite im Wesentlichen dem Mündungsdurchmesser entspricht und die Schnittqualität gesteigert werden kann.

Bevorzugt ist eine Ausführungsform des Schneideverfahrens, bei der ein Schneidgasdruck höchstens drei bar beträgt. Vorzugsweise beträgt der Schneidgasdruck höchstens zwei bar. Besonders vorzugsweise beträgt der Schneidgasdruck höchstens eineinhalb bar. Ein geringerer Schneidgasdruck verringert den Gasverbrauch, sodass das Schneideverfahren kostengünstig durchgeführt werden kann.

Eine bevorzugte Weiterbildung des Schneideverfahrens sieht vor, dass der Schneidgasdruck in Abhängigkeit von dem Mündungsdurchmesser vorbestimmt ist, wobei der Schneidgasdruck mit fallendem Mündungsdurchmesser zunimmt. Ein fallender Mündungsdurchmesser bewirkt einen geringeren Schneidgasvolumenstrom, der zu einem geringeren exothermen Anteil des Aufschmelzvorgangs im Schnittspalt führt. Der geringere Volumenstrom muss daher durch einen höheren Schneidgasdruck kompensiert werden.

In einer bevorzugten Ausführungsform des Schneideverfahrens beträgt die Werkstückdicke zumindest 15 Millimeter, bevorzugt zumindest 20 Millimeter. Die Erfinder haben erkannt, dass die erfindungsgemäßen Vorteile gegenüber herkömmlichen Schneideverfahren mit zunehmender Werkstückdicke in besonderem Maße auftreten.

Bei einer bevorzugten Ausführungsform des Schneideverfahrens beträgt die Laserleistung zumindest 12 Kilowatt. Vorzugsweise beträgt die Laserleistung zumindest 15 Kilowatt, besonders bevorzugt zumindest 20 Kilowatt. Die Schnittkantenqualität kann in Kombination mit den erfindungsgemäßen Verfahrensmerkmalen durch eine zunehmende Laserleistung weiter erhöht werden. Insbesondere begünstigt eine hohe Laserleistung das Schneiden dicker Werkstücke.

Weitere Merkmale und Vorteile der Erfindung ergeben sich aus der Beschreibung, den Ansprüchen und der Zeichnung. Erfindungsgemäß können die vorstehend genannten und die noch weiter ausgeführten Merkmale jeweils einzeln für sich oder zu mehreren in beliebigen zweckmäßigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt eine Laserschneidmaschine zum Laserstrahl-Brennschneiden mit einem Schneidkopf und einer Maschinensteuerung in einer schematischen perspektivischen Ansicht.
- Fig. 2: zeigt eine schematische Ansicht eines Laserstrahl-Strahlengangs durch den Schneidkopf der Laserschneidmaschine bei einem erfindungsgemäßen Schneideverfahren.
- Fig. 3: zeigt in einem Kennfeld mehrere Abhängigkeiten zwischen einer Fokuslage und einem Mündungsdurchmesser.
- Fig. 4: zeigt in einem weiteren Kennfeld mehrere Abhängigkeiten zwischen dem Mündungsdurchmesser und einer Werkstückdicke.

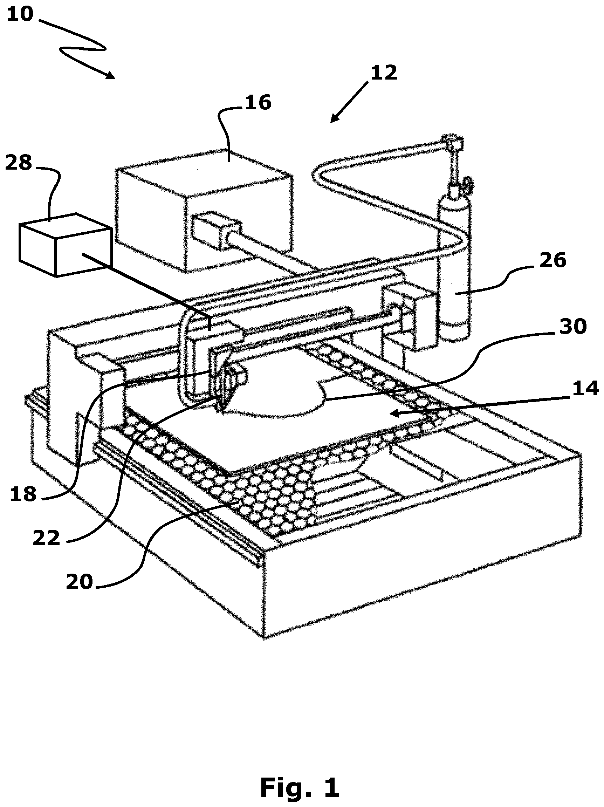

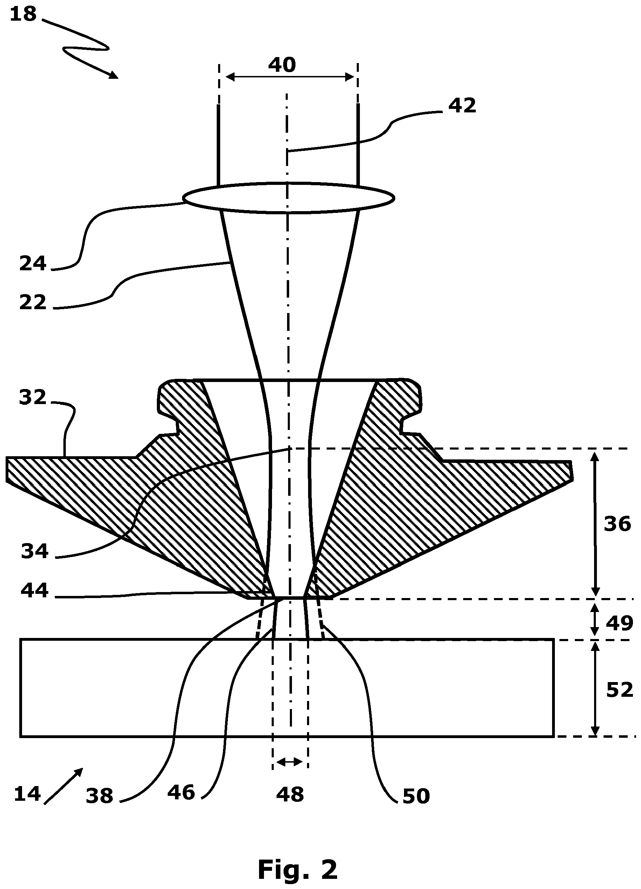

**Fig. 1** zeigt eine Anordnung **10** mit einer Laserschneidmaschine **12** und einem zum Laserstrahl-Brennschneiden an der Laserschneidmaschine 12 angeordneten metallischen Werkstück **14.** Die Laserschneidmaschine 12 weist vorzugsweise einen CO₂-Laser, einen Festkörperlaser oder einen Diodenlaser als Laserstrahlerzeuger **16,** einen verfahrbaren Schneidkopf **18** und eine Werkstückauflage **20** auf, auf der das metallische Werkstück 14 angeordnet ist. Im Laserstrahlerzeuger 16 wird ein Laserstrahl **22** erzeugt, der mittels eines Lichtleitkabels (nicht gezeigt) oder Umlenkspiegeln (nicht gezeigt) vom Laserstrahlerzeuger 16 zum Schneidkopf 18 geführt wird. Der Laserstrahl 22 wird mittels einer im Schneidkopf 18 angeordneten Fokussieroptik **24** (siehe Fig. 2) auf das metallische Werkstück 14 gerichtet. Die Laserschneidmaschine 12 wird darüber hinaus mit Schneidgas **26** - vorzugsweise mit Sauerstoff - versorgt. Das Schneidgas 26 wird dem Schneidkopf 18 - vorzugsweise Druckgeregelt - zugeführt, aus dem es zusammen mit dem Laserstrahl 22 austritt. Die Laserschneidmaschine 12 umfasst ferner eine Maschinensteuerung **28,** die programmiert ist, den Schneidkopf 18 entsprechend einer Schneidkontur **30** relativ zum metallischen Werkstück 14 zu verfahren. Die Maschinensteuerung 28 ist zudem dazu programmiert, die Fokussieroptik 24 (siehe Fig. 2) relativ zu einer Schneiddüse **32** (siehe Fig. 2) zu verfahren.

**Fig. 2** zeigt eine schematische Ansicht eines beispielhaften Strahlengangs durch den Schneidkopf 18 aus Fig. 1. Der Laserstrahl 22 - hier mit durchgezogenen Linien dargestellt - wird von dem Laserstrahlerzeuger 16 (siehe Fig. 1) kommend, durch Umlenkspiegel (nicht gezeigt) auf die Fokussieroptik 24 - hier ist beispielhaft eine Sammellinse der Fokussieroptik 24 dargestellt - und anschließend auf das Werkstück 14 gerichtet.

Die Fokussieroptik 24 bündelt den Laserstrahl 22 in einem Fokuspunkt bzw. Fokus **34,** der erfindungsgemäß in einer Fokuslage **36** oberhalb einer Düsenmündung **38** angeordnet ist. Der Fokus 34 des Laserstrahls 22 liegt wie dargestellt an der Position eines engsten Strahlquerschnitts **40** des Laserstrahls 22. Der Strahlquerschnitt 40 des Laserstrahls 22 weitet sich ausgehend von dem Fokus 34 mit zunehmender Strahlausbreitung in einer zu einer Mittenachse **42** des Laserstrahls 22 radialen Richtung auf.

Im Umfeld der Düsenmündung 38 der Schneiddüse 32 bildet sich daher ein theoretischer Überschneidungsbereich **44** zwischen dem Laserstrahl 22 und der Schneiddüse 32 aus. Im Überschneidungsbereich 44 wirkt die Schneiddüse 32 als optische Blende und begrenzt den Laserstrahl 22 in radialer Richtung auf einen Schnittstrahl **46.** Der Schnittstrahl 46 weist eine Schnittbreite **48** auf, die im Wesentlichen dem Mündungsdurchmesser der Düsenmündung 38 entspricht. Dies ist insbesondere dann der Fall, wenn ein Düsenabstand **49** gering ausgebildet ist.

Vorzugsweise beträgt der Düsenabstand 49 zumindest 0,2 Millimeter und höchstens 3,5 Millimeter, beispielsweise 1,5 Millimeter. Aufgrund des geringen Mündungsdurchmessers und der hohen Fokuslage 36 streift der Laserstrahl 22 die Schneiddüse 32. Hierdurch kann ein niederenergetischer Randbereich **50** des Laserstrahls 22 durch die Schneiddüse 32 blockiert werden, wodurch eine Erwärmung des metallischen Werkstücks 14 im Randbereich des Schnittstrahls 46 vermieden wird. In der Folge wird die Schnittqualität des Schneideverfahrens an dem metallischen Werkstück 14 verbessert.

Hier beträgt die Fokuslage 36, bzw. der Höchstabstand des Fokus 34 von der Düsenmündung 38 höchstens das Sechzehnfache und wenigstens das Sechsfache des Mündungsdurchmessers der Düsenmündung 38. Einerseits wird hierdurch eine scharfe Abgrenzung des Schnittstrahls 46 von einem niederenergetischen Randbereich 50 des Laserstrahls 22 begünstigt, wodurch eine Erwärmung des Werkstücks 14 im Umfeld des Schnittstrahls 46 vermindert werden kann. Dies verbessert bei Werkstücken mit einer Werkstückdicke **52** von zumindest zehn Millimetern die Schnittqualität. Andererseits kann ein durch die Schneiddüse 32 zurückgehaltener Energieanteil des niederenergetischen Randbereichs 50 so gering wie nötig ausfallen, wodurch die Haltbarkeit der Schneiddüse 32 verlängert wird.

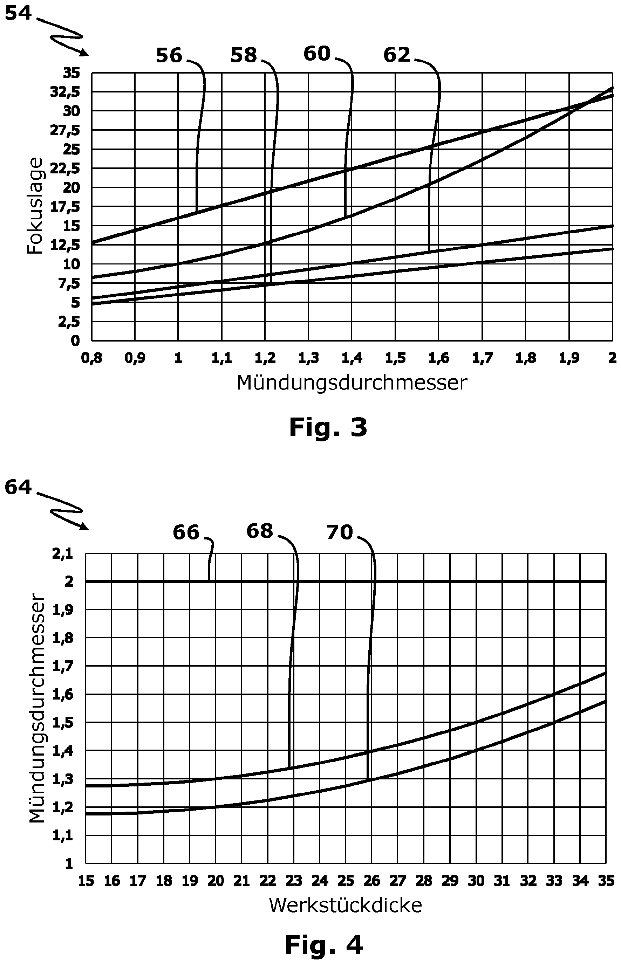

**Fig. 3** zeigt in einem beispielhaften ersten Kennfeld **54** verschiedene Ober- und Untergrenzen für die Fokuslage 36 (siehe Fig. 2) des Laserstrahls 22 (siehe Fig. 2) in Abhängigkeit von dem Mündungsdurchmesser der Düsenmündung 38 (siehe Fig. 2). In dem dargestellten Kennfeld ist die Fokuslage 36 entlang der Ordinatenachse bzw. vertikalen Achse aufgetragen. Der Mündungsdurchmesser ist entlang der Abszissenachse bzw. horizontalen Achse aufgetragen. Die Fokuslage 36 und der Mündungsdurchmesser sind in der Einheit Millimeter angegeben.

Die Fokuslage 36 ist beispielhaft im Wertebereich von 0 Millimetern bis 35 Millimeter aufgetragen. Der Mündungsdurchmesser weist einen beispielhaften Wertebereich von 0,8 Millimetern bis 2 Millimeter auf.

Eine erste lineare Abhängigkeit **56** zwischen der Fokuslage 36 und dem Mündungsdurchmesser beträgt für die Fokuslage 36 das Sechzehnfache des Mündungsdurchmessers. Die lineare Abhängigkeit 56 lautet in Formelschreibweise **F_{L}** = 16 · **D_{M}**, wobei F_{L} die Fokuslage 36 und D_{M} den Mündungsdurchmesser bezeichnen. Erfindungsgemäß beschreibt die erste lineare Abhängigkeit 56 einen Höchstabstand des Fokus 34 (siehe Fig. 2) zu der Düsenmündung 38 (siehe Fig. 2) oder mit anderen Worten eine erste Obergrenze für die Fokuslage 36.

Eine beispielhafte zweite lineare Abhängigkeit **58** zwischen der Fokuslage 36 und dem Mündungsdurchmesser beträgt für die Fokuslage 36 das Sechsfache des Mündungsdurchmessers. Die zweite lineare Abhängigkeit 58 lautet in Formelschreibweise: F_{L} = 6 · D_{M}. Die zweite lineare Abhängigkeit 58 beschreibt einen Mindestabstand des Fokus 34 zu der Düsenmündung 38 oder mit anderen Worten eine erste Untergrenze für die Fokuslage 36.

Eine beispielhafte erste quadratische Abhängigkeit **60** zwischen der Fokuslage 36 und dem Mündungsdurchmesser kann beschrieben werden als: Fokuslage 36 ist gleich zwölfmal der Mündungsdurchmesser im Quadrat subtrahiert um dreizehnmal den Mündungsdurchmesser addiert um elf. Die erste quadratische Abhängigkeit 60 lautet in Formelschreibweise: F_{L} = 12 · D_{M}² - 13 · D_{M} + 11. Die erste quadratische Abhängigkeit 60 kann beispielsweise zur Begrenzung des Höchstabstands zwischen dem Fokus 34 und der Düsenmündung 38 dienen, wodurch die Schnittqualität weiter verbessert werden kann. Mit anderen Worten beschreibt die erste quadratische Abhängigkeit 60 eine zweite Obergrenze für die Fokuslage 36. Übersteigt ein Wert für die Fokuslage 36 gemäß der ersten quadratischen Abhängigkeit 60, einen Wert für die Fokuslage 36 gemäß der ersten linearen Abhängigkeit 56 bei gleichem Wert des Mündungsdurchmessers, so ist der Wert der Fokuslage 36 gemäß der ersten linearen Abhängigkeit 56 vorrangig und umgekehrt.

Eine beispielhafte zweites quadratisches Abhängigkeit **62** zwischen der Fokuslage 36 und dem Mündungsdurchmesser kann beschrieben werden als: Fokuslage 36 ist gleich einhalbmal dem Mündungsdurchmesser im Quadrat addiert mit sechseinhalbmal dem Mündungsdurchmesser. Die zweite quadratische Abhängigkeit 62 lautet in Formelschreibweise: F_{L} = 0,5 · D_{M}² + 6,5 · D_{M}. Die zweite quadratische Abhängigkeit 62 kann beispielsweise zur Begrenzung des Mindestabstands zwischen dem Fokus 34 und der Düsenmündung 38 dienen, wodurch die Schnittqualität weiter verbessert werden kann. Mit anderen Worten beschreibt die zweite quadratische Abhängigkeit 62 eine zweite Untergrenze für die Fokuslage 36.

Die Fokuslage 36 wird zwischen den durch die Abhängigkeiten 56 und 60 beschriebenen Obergrenzen und den durch die Abhängigkeiten 58 und 62 beschriebenen Untergrenzen gewählt. Insbesondere kann die Fokuslage zwischen den jeweils schärferen Grenzen, d. h. der für den vorliegenden Mündungsdurchmesser niedrigeren Obergrenze und höheren Untergrenze, gewählt werden.

**Fig. 4** zeigt in einem beispielhaften zweiten Kennfeld **64** verschiedene Ober- und Untergrenzen für den Mündungsdurchmesser der Schneiddüse 32 (siehe Fig. 2) in Abhängigkeit von der Werkstückdicke 52 des Werkstücks 14 (siehe Fig. 2). In dem dargestellten zweiten Kennfeld 64 ist der Mündungsdurchmesser entlang der Ordinatenachse bzw. vertikalen Achse aufgetragen. Die Werkstückdicke 52 ist entlang der Abszissenachse bzw. horizontalen Achse aufgetragen. Der Mündungsdurchmesser und die Werkstückdicke 52 sind in der Einheit Millimeter angegeben.

Der Mündungsdurchmesser ist beispielhaft im Wertebereich von 1 Millimeter bis 2,1 Millimeter aufgetragen. Die Werkstückdicke 52 weist einen beispielhaften Wertebereich von 15 Millimetern bis 35 Millimetern auf.

Eine dritte lineare Abhängigkeit **66** zwischen dem Mündungsdurchmesser und der Werkstückdicke 52 (siehe Fig. 2) beträgt für den Mündungsdurchmesser bei allen Werkstückdicken 52 höchstens zwei Millimeter. Das Linearverhältnis 66 lautet in Formelschreibweise D_{M} = 2. Erfindungsgemäß stellt die dritte lineare Abhängigkeit 66 ein Höchstmaß für den Mündungsdurchmesser der Düsenmündung 38 (siehe Fig. 2) dar. Hierdurch kann der Laserstrahl 22 (siehe Fign. 1 und 2) auf einen effektiven Strahlquerschnitt 40 begrenzt werden, der zum Laserstrahl-Brennschneiden von Werkstücken 14 (siehe Fign. 1 und 2) mit einer Werkstückdicke 52 (siehe Fig. 2) von zumindest zehn Millimetern und einer Laserleistung von zumindest zehn Kilowatt besonders geeignet ist.

Eine beispielhafte dritte quadratische Abhängigkeit **68** zwischen dem Mündungsdurchmesser und der Werkstückdicke 52 kann beschrieben werden als: Mündungsdurchmesser ist gleich ein Tausendstel der Werkstückdicke 52 im Quadrat subtrahiert um drei Hundertstel der Werkstückdicke 52 addiert mit Eineinhalb. Die dritte quadratische Abhängigkeit 68 lautet in Formelschreibweise: D_{M} = 0,001 · Dw² - 0,03 · Dw + 1,5. Die dritte quadratische Abhängigkeit 68 kann beispielsweise zur weiteren Begrenzung des Mündungsdurchmessers dienen. Hierdurch kann der Laserstrahl 22 weiter begrenzt und die Schnittqualität verbessert werden.

Eine beispielhafte vierte quadratische Abhängigkeit **70** zwischen dem Mündungsdurchmesser und der Werkstückdicke 52 kann beschrieben werden als: Mündungsdurchmesser ist gleich ein Tausendstel der Werkstückdicke 52 im Quadrat subtrahiert um drei Hundertstel der Werkstückdicke 52 addiert mit eins Komma vier. Die vierte quadratische Abhängigkeit 70 lautet in Formelschreibweise: D_{M} = 0,001 · Dw² - 0,03 · Dw + 1,4. Die vierte quadratische Abhängigkeit 70 kann beispielsweise zur weiteren Begrenzung des Mündungsdurchmessers dienen. Hierdurch kann der Laserstrahl 22 noch weiter begrenzt und die Schnittqualität weiter verbessert werden.

Die Abhängigkeiten 66, 68, 70 beschreiben hier zunehmend schärfere Obergrenzen für den Mündungsdurchmesser in Abhängigkeit von der Werkstückdicke 52. Je nach den Anforderungen insbesondere an die Schnittqualität kann der Mündungsdurchmesser für eine vorliegende Werkstückdicke unterhalb einer dieser Obergrenzen gewählt werden. Zugleich wird der Mündungsdurchmesser vorzugsweise oberhalb einer Untergrenze gewählt, die - unabhängig von der Werkstückdicke 52 - 0,8 Millimeter, insbesondere 1 Millimeter, betragen kann.

### Bezugszeichenliste

Anordnung **10;**
Laserschneidmaschine **12;**
Werkstück **14;**
Laserstrahlerzeuger **16;**
Schneidkopf **18;**
Werkstückauflage **20;**
Laserstrahl **22;**
Fokussieroptik **24;**
Schneidgas **26;**
Maschinensteuerung **28;**
Schneidkontur **30;**
Schneiddüse **32;**
Fokus **34;**
Fokuslage **36;**
Düsenmündung **38;**
Strahlquerschnitt **40;**
Mittenachse **42;**
Überschneidungsbereich **44;**
Schnittstrahl **46;**
Schnittbreite **48;**
Düsenabstand **49;**
niederenergetischer Randbereich **50;**
Werkstückdicke **52;**
ersten Kennfeld **54;**
erste lineare Abhängigkeit **56;**
Zweite lineare Abhängigkeit **58;**
erste quadratische Abhängigkeit **60;**
zweite quadratische Abhängigkeit **62;**
zweites Kennfeld **64;**
dritte lineare Abhängigkeit **66;**
dritte quadratische Abhängigkeit **68;**
vierte quadratische Abhängigkeit **70;**
Formelzeichen Fokuslage **F_{L}**;
Formelzeichen Mündungsdurchmesser **D_{M}**;
Formelzeichen Werkstückdicke **Dw.**

## Patentansprüche

1. Schneideverfahren zum Laserstrahl-Brennschneiden von metallischen Werkstücken (14) mit einer Werkstückdicke (52) von zumindest zehn Millimetern, mit einer Laserleistung von zumindest zehn Kilowatt,
wobei eine Düsenmündung (38) einer Schneiddüse (32) einen Mündungsdurchmesser von höchstens zwei Millimetern aufweist; und
wobei ein Fokus (34) eines Laserstrahls (22) oberhalb der Düsenmündung (38) angeordnet ist und einen Höchstabstand entlang einer Mittenachse (42) des Laserstrahls (22) von der Düsenmündung (38) aufweist, wobei der Höchstabstand höchstens das Sechzehnfache des Mündungsdurchmessers beträgt.

2. Schneideverfahren nach Anspruch 1, **dadurch gekennzeichnet, dass** der Fokus (34) einen Mindestabstand von der Düsenmündung (38) aufweist, wobei der Mindestabstand mindestens das Sechsfache des Mündungsdurchmessers beträgt.

3. Schneideverfahren nach einem der vorhergehenden Ansprüche, **dadurch gekennzeichnet, dass** der Mündungsdurchmesser zumindest 0,8 Millimeter, vorzugsweise zumindest 1 Millimeter, beträgt.

4. Schneideverfahren nach einem der vorhergehenden Ansprüche, **dadurch gekennzeichnet, dass** der Mündungsdurchmesser in Abhängigkeit (66, 68, 70) von der Werkstückdicke (52) vorbestimmt ist, wobei der Mündungsdurchmesser mit zunehmender Werkstückdicke (52) zunimmt.

5. Schneideverfahren nach einem der vorhergehenden Ansprüche, **dadurch gekennzeichnet, dass** ein Düsenabstand (49) zwischen dem metallischen Werkstück (14) und der Düsenmündung (38) zumindest 0,2 Millimeter, bevorzugt zumindest 0,3 Millimeter, beträgt.

6. Schneideverfahren nach Anspruch 5, **dadurch gekennzeichnet, dass** der Düsenabstand (49) höchstens 3,5 Millimeter, bevorzugt höchstens 3 Millimeter, beträgt.

7. Schneideverfahren nach einem der vorhergehenden Ansprüche, **dadurch gekennzeichnet, dass** ein Schneidgasdruck höchstens 3, bevorzugt höchstens 2, besonders bevorzugt höchstens 1,5 bar, beträgt.

8. Schneideverfahren nach Anspruch 7, **dadurch gekennzeichnet, dass** der Schneidgasdruck in Abhängigkeit von dem Mündungsdurchmesser vorbestimmt ist, wobei der Schneidgasdruck mit fallendem Mündungsdurchmesser zunimmt.

9. Schneideverfahren nach einem der vorhergehenden Ansprüche, **dadurch gekennzeichnet, dass** die Werkstückdicke (52) zumindest 15 Millimeter, bevorzugt zumindest 20 Millimeter beträgt.

10. Schneideverfahren nach einem der vorhergehenden Ansprüche, **dadurch gekennzeichnet, dass** die Laserleistung zumindest 12 Kilowatt, vorzugsweise zumindest 15 Kilowatt, besonders bevorzugt zumindest 20 Kilowatt, beträgt.

11. Schneideverfahren nach einem der vorhergehenden Ansprüche, **dadurch gekennzeichnet, dass** der Mündungsdurchmesser höchstens 1,9 Millimeter, vorzugsweise höchstens 1,8 Millimeter, beträgt.

## Claims

1. A cutting method for laser beam flame cutting of metallic workpieces (14) with a workpiece thickness (52) of at least ten millimeters, the cutting being done at a laser power of at least ten kilowatts,
wherein a nozzle mouth (38) of a cutting nozzle (32) has a mouth diameter of at most two millimeters; and
wherein a focus (34) of a laser beam (22) is arranged above the nozzle mouth (38) and has a maximum distance from the nozzle mouth (38) along a center axis (42) of the laser beam (22), wherein the maximum distance is at most sixteen times the mouth diameter.

2. The cutting method according to claim 1, **characterized in that** the focus (34) has a minimum distance from the nozzle mouth (38), wherein the minimum distance is at least six times the diameter of the mouth.

3. The cutting method according to one of the preceding claims, **characterized in that** the mouth diameter is at least 0.8 millimeters, preferably at least 1 millimeter.

4. The cutting method according to one of the preceding claims, **characterized in that** the mouth diameter is pre-determined as a function (66, 68, 70) of the workpiece thickness (52), wherein the mouth diameter increases with increasing workpiece thickness (52).

5. The cutting method according to one of the preceding claims, **characterized in that** a nozzle distance (49) between the metallic workpiece (14) and the nozzle mouth (38) is at least 0.2 millimeters, preferably at least 0.3 millimeters.

6. The cutting method according to claim 5, **characterized in that** the nozzle distance (49) is at most 3.5 millimeters, preferably at most 3 millimeters.

7. The cutting method according to one of the preceding claims, **characterized in that** a cutting gas pressure is at most 3, preferably at most 2, more preferably at most 1.5 bar.

8. The cutting method according to claim 7, **characterized in that** the cutting gas pressure is pre-determined as a function of the mouth diameter, wherein the cutting gas pressure increases with decreasing mouth diameter.

9. The cutting method according to one of the preceding claims, **characterized in that** the workpiece thickness (52) is at least 15 millimeters, preferably at least 20 millimeters.

10. The cutting method according to one of the preceding claims, **characterized in that** the laser power is at least 12 kilowatts, preferably at least 15 kilowatts, more preferably at least 20 kilowatts.

11. The cutting method according to one of the preceding claims, **characterized in that** the mouth diameter is at most 1.9 millimeters, preferably at most 1.8 millimeters.

## Revendications

1. Procédé de coupe pour l'oxycoupage par faisceau laser de pièces métalliques (14) ayant une épaisseur (52) de pièce d'au moins dix millimètres, avec une puissance laser d'au moins dix kilowatts,
dans lequel une embouchure (38) de buse d'une buse de coupe (32) présente un diamètre d'embouchure de deux millimètres au plus ; et
dans lequel un foyer (34) d'un faisceau laser (22) est disposé au-dessus de l'embouchure (38) de buse et présente une distance maximale le long d'un axe central (42) du faisceau laser (22) par rapport à l'embouchure (38) de buse, dans lequel la distance maximale est au plus égale à seize fois le diamètre d'embouchure.

2. Procédé de coupe selon la revendication 1, **caractérisé en ce que** le foyer (34) présente une distance minimale par rapport à l'embouchure (38) de buse, dans lequel la distance minimale est au moins égale à six fois le diamètre d'embouchure.

3. Procédé de coupe selon l'une des revendications précédentes, **caractérisé en ce que** le diamètre d'embouchure est d'au moins 0,8 millimètre, préférablement d'au moins 1 millimètre.

4. Procédé de coupe selon l'une des revendications précédentes, **caractérisé en ce que** le diamètre d'embouchure est prédéterminé en fonction (66, 68, 70) de l'épaisseur (52) de la pièce, dans lequel le diamètre d'embouchure augmente avec l'épaisseur (52) croissante de la pièce.

5. Procédé de coupe selon l'une des revendications précédentes, **caractérisé en ce qu'**une distance (49) de buse entre la pièce métallique (14) et l'embouchure (38) de buse est d'au moins 0,2 millimètre, préférablement d'au moins 0,3 millimètre.

6. Procédé de coupe selon la revendication 5, **caractérisé en ce que** la distance (49) de buse est au plus de 3,5 millimètres, préférablement au plus de 3 millimètres.

7. Procédé de coupe selon l'une des revendications précédentes, **caractérisé en ce qu'**une pression de gaz de coupe est au plus de 3, préférablement au plus de 2, plus préférablement au plus de 1,5 bar.

8. Procédé de coupe selon la revendication 7, **caractérisé en ce que** la pression de gaz de coupe est prédéterminée en fonction du diamètre d'embouchure, dans lequel la pression de gaz de coupe augmente lorsque le diamètre d'embouchure diminue.

9. Procédé de coupe selon l'une des revendications précédentes, **caractérisé en ce que** l'épaisseur (52) de la pièce est d'au moins 15 millimètres, préférablement d'au moins 20 millimètres.

10. Procédé de coupe selon l'une des revendications précédentes, **caractérisé en ce que** la puissance du laser est d'au moins 12 kilowatts, préférablement d'au moins 15 kilowatts, plus préférablement d'au moins 20 kilowatts.

11. Procédé de coupe selon l'une des revendications précédentes, **caractérisé en ce que** le diamètre d'embouchure est au plus de 1,9 millimètre, préférablement au plus de 1,8 millimètre.
